# EUROPEAN PATENT SPECIFICATION

(11) **EP 1 375 990 B1**
(45) Date of publication and mention of the grant of the patent: **20.07.2005**
(21) Application number: 03396041.0
(22) Date of filing: 14.05.2003
(51) Int. Cl.: F16K 31/40

(54) **Magnetic valve**
Magnetventil
Soupape magnétique

(30) Priority: 20.06.2002 FI 20021210
(43) Date of publication of application: 02.01.2004
(73) Proprietor: ORAS OY, 26101 Rauma (FI)
(72) Inventor: Toivonen, Ari, 27100 Eurajoki (FI); Alhola, Jukka, 27100 Eurajoki (FI)
(74) Representative: Pelin, Torolf

(56) References cited:
- EP-A- 1 070 947
- GB-A- 764 413
- US-A- 3 859 619
- US-A- 3 904 167
- US-A- 5 887 847
- US-A- 5 954 080

## Description

The invention relates to a material-flow controlling magnetic valve comprising a material inlet connection, an outlet connection, at least one sealing surface, and an element movable axially relative to the sealing surface, which, in itself or through the use of a blocking member movable together therewith, is in cooperation with said sealing surface establishing a port between the inlet connection and the outlet connection, the movable element defining, together with the valve body, a housing, which is connectable to said inlet connection by way of a first flow channel controlled by a first solenoid, and to said outlet connection by way of a second flow channel controlled by a second solenoid, whereby the volume of the housing, and at the same time the position of the movable element is set by means of the solenoids, in order to establish a controlled port between the inlet and outlet connections.

The publication WO 97/04260 discloses a prior known solution, wherein a flow through a channel is opened or closed by means of an electromagnet or a permanent magnet. A solenoid is used for operating a valve-opening lever from one end position to the other, the valve being either open or shut. Closing and opening are effected to full extent in a single operation, i.e. the valve is either fully open or fully shut.

Furthermore, valves or water faucets provided with two solenoids for controlling the position of a movable valve member as stated above, have been suggested in the US patents 3904167, 5887847 and 5945080 for example.

It is common to these publications that the position of the movable valve member is obtained by controlled energizing of the solenoids. More particularly, in US 3904167 the opening solenoid is enerqized until the required amount is of flow observed. In the two later publications energizing is more clearly defined as pulsing of the solenoids, thus incrementing the flow by each pulse.

It is an object of this invention to provide a continuously controlled flow through a magnetic valve, said flow being controllable and sustainable as a constant of desired volume. It is also an object to control the flow through actual control of the position of the valve member.

In order to accomplish this, the valve of the invention is characterized in that a sensor system, sensing the position of the movable element (6), is connected by way of control electronics (16) with said solenoids (8, 10).

Embodiments of the invention are characterized by what is set forth in the appended claims.

The invention will now be described in more detail by way of example with reference to the accompanying figures, in which
fig. 1 shows a cross-section in principle for a magnetic valve without any flow passing through the magnetic valve
fig. 3 shows a cross-section in principle for a magnetic valve with a maximum flow passing through the magnetic valve, and
fig. 4 shows a magnetic valve control in a diagrammatic view.

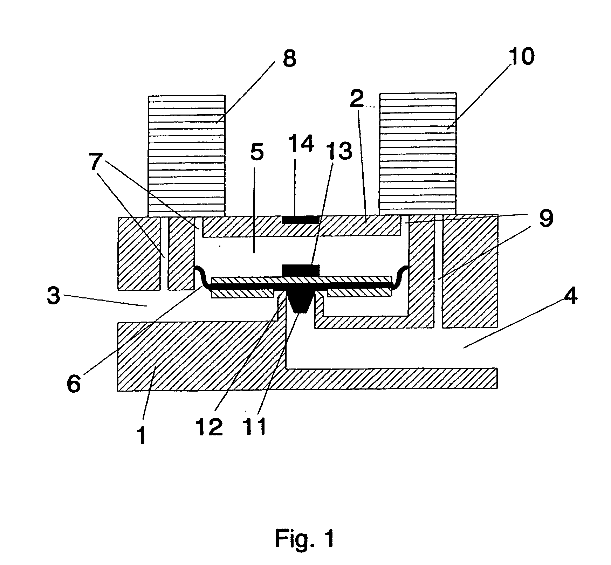

Fig. 1 shows a magnetic valve 1 in cross-section, said magnetic valve comprising a body 2. The body 2 is provided with an inlet connection 3 for an inbound liquid or gaseous substance, such as water, for example, as well as with an outlet connection 4 for discharging the substance from the magnetic valve 1. The magnetic valve 1 is provided with a housing 5, one wall of which is constituted by a movable element 6. The movable element 6 is preferably constituted at least partially by a flexible diaphragm for regulating a flow passing through the magnetic valve 1. The housing is supplied with a substance flowing through the magnetic valve 1 from the inlet connection 3 by way of an inlet channel 7. The inlet channel 7 is adapted to be closed and opened by means of a solenoid 8. Respectively, the housing 5 can be drained of a substance by way of an outlet channel 9 to the magnetic valve's outlet connection 4. The regulation of a flow occurring through the outlet channel 9 is effected by means of a solenoid 10. The solenoid 10 can be used either for opening or closing the outlet channel 9. The movable element 6 is preferably provided with a blocking member 11, which descends towards a sealing surface 12 present in the magnetic valve's 1 body 2 as the amount of substance in the housing 5 is increased, thus augmenting the housing volume. When the substance volume in the housing 5 is increased sufficiently, the blocking member 11 descends fully against the magnetic valve's 1 sealing surface 12 to stop the flow completely, the magnetic valve being in a closed condition as indicated in fig. 1.

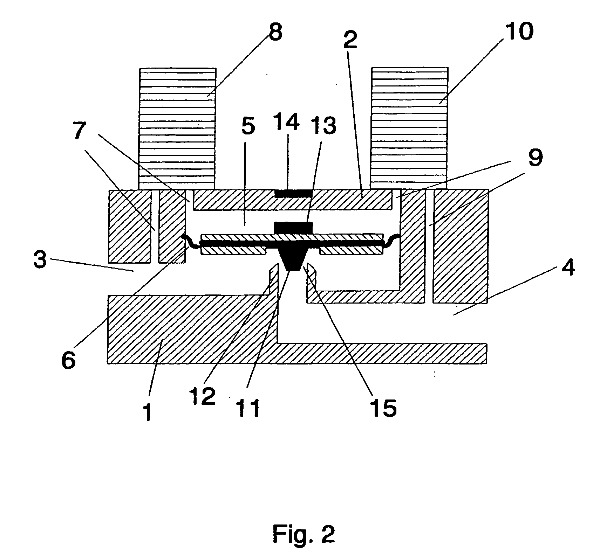

In addition, the blocking member 11 is preferably fitted with a permanent magnet 13, as well as with a magnetic field sensor 14 on the opposite side of the housing 5 for monitoring the position of the movable element 6 and simultaneously that of the blocking member 11 in order to control or regulate a flow passing through the magnetic valve 1, as described next in more detail with reference to fig. 2.

In fig. 2, the housing 5 has been drained of some substance by having the solenoid 10 open the outlet channel 9 for a moment. Consequently, a pressure existing on the inlet connection's 3 side of the magnetic valve 1 shifts the movable element 6 to diminish a volume of the housing 5 and at the same time disengages the blocking member 11 from the sealing surface 12 present in the magnetic valve body 2. Thus, material is able to flow through a port 15 established between the blocking member 11 and the valve's sealing surface 12. The port's 15 size is adjusted by means of the discharged volume of a substance present in the housing 5 effected by the solenoid 10 through the outlet channel 9 or by means of the volume of substance supplied by the solenoid 8 through the inlet channel 7. The magnitude of pressure existing on the inlet connection's 3 side of the magnetic valve 1 has also an effect on the flow rate of a material volume both in the inlet channel 7 and in the outlet channel 9. In order to compensate for flow rate variations in the channels 7 and 9, possibly caused by pressure fluctuations existing on this inlet connection's 3 side, the movable element 6 and/or the blocking member 11 are/is preferably provided with a permanent magnet 13. The permanent magnet 13 can be mounted directly on the movable element 6 or, optionally, it can be fitted for example inside the blocking member 11. Respectively, on the side of the housing 5, opposite to the permanent magnet 13, is mounted a magnetic field sensor 14. The magnetic field sensor 14 and the permanent magnet 13 enable a simple control circuit to be established, by means of which it is possible to precisely control the volume of material or substance present in the housing 5 by opening, as necessary, the inlet channel 7 or the outlet channel 9 with the solenoids 8 and 10, respectively. While adjusting a position of the permanent magnet 13 in relation to the magnetic field sensor 14, the volume of a substance present in the housing 5 is used at the same time for controlling a flow rate passing through the magnetic valve 1 by making the port 15 smaller or larger. The permanent magnet's 13 position is monitored by the magnetic field sensor 14 and the information supplied thereby is used by control electronics for controlling the solenoids 8 and 10 and a flow occurring the channels 7 and 9, respectively, until the permanent magnet 13 assumes a desired position in relation to the magnetic field sensor 14 and a desired flow rate through the magnetic valve 1 is accomplished.

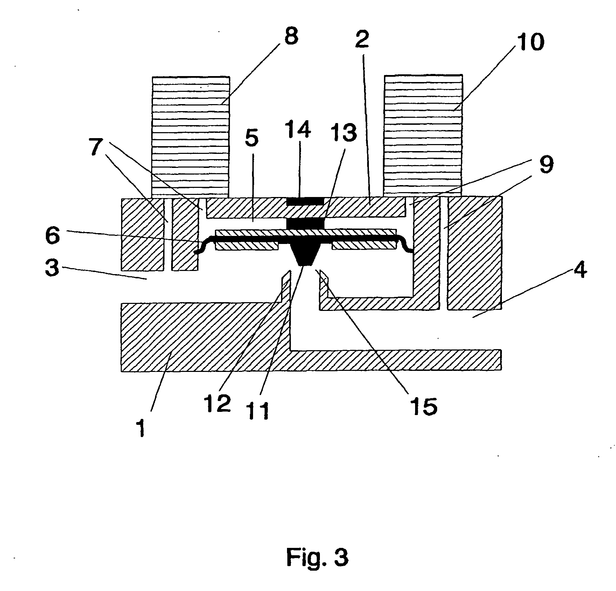

Fig. 3 illustrates a condition, in which the magnetic valve 1 is fully open and a material flow through the port 15 is at its maximum. At this time, the housing 5 contains a minimum volume of material and in this condition the permanent magnet 13 is pressed against the housing's 5 top surface to lie as close as possible to the magnetic field sensor 14.

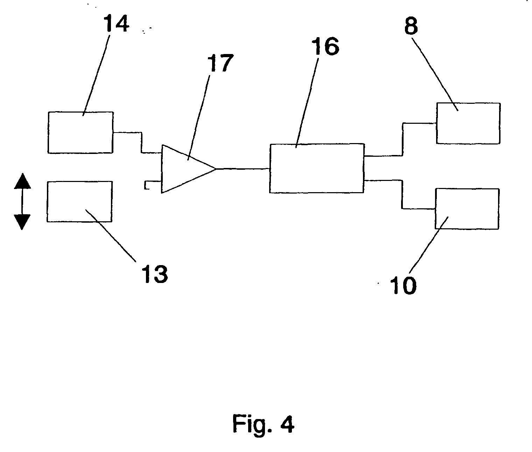

Fig. 4 illustrates operation of the magnetic valve 1 in a block diagram. It shows that the operation of solenoids 8 and 10 is controlled by means of control electronics 16 and sensors, which monitor the position of a movable element 6 constituting at least partially one of the walls of a housing 5 and which preferably comprise a permanent magnet 13 and a magnetic field sensor 14. The mechanism preferably includes also an amplifier 17 between the magnetic field sensor 14 and the control electronics 16.

The magnetic valve 1 may have an internal structure different from that shown in fig. 1, but the essential feature is that the rate of a flow passing through the magnetic valve by way of the port 15 is controlled by means of the volume of material contained in the housing 5, and that the volume of material present in the housing 5 is monitored by means of the simple sensor system 13 and 14 as well as regulated by means of the solenoids 8 and 10 controlled by the control electronics 16.

Instead of a diaphragm, a volume change of the housing 5 can be optionally effected, for example by means of a sealed piston. In this case, the piston is able to reciprocate in a sleeve consistently with a material volume present in the housing 5, said material volume being regulated as described above. The end of the piston, opposite with respect to the housing 5, is preferably provided with a complementary blocking member 11 pressing against the magnetic valve's 1 sealing surface 12.

On the other hand, one wall of the housing 5 can be completely or partially constituted by a flexible diaphragm, which in itself, without a separate blocking member 11, presses against the sealing surface 12 present in the valve body 2, which sealing surface can also be given a design other than what is shown in figs. 1-3. However, in this case the diaphragm is fitted with a permanent magnet 13 for monitoring the diaphragm position.

## Claims

1. A material-flow controlling magnetic valve (1), comprising a material inlet connection (3), an outlet connection (4), at least one sealing surface (12), and an element (6) movable axially relative to the sealing surface (12), which, in itself or through the use of a blocking member (11) movable together therewith, is in cooperation with said sealing surface (12) establishing a port (15) between the inlet connection (3) and the outlet connection (4), the movable element (6) defining, together with the valve body, a housing (5), which is connectable to said inlet connection (3) by way of a first flow channel (7) controlled by a first solenoid (8), and to said outlet connection (4) by way of a second flow channel (9) controlled by a second solenoid (10), whereby the volume of the housing (5), and at the same time the position of the movable element (6) is set by means of the solenoids (8, 10), in order to establish a controlled port (15) between the inlet and outlet connections (3, 4), **characterized in that** a sensor system (13, 14), sensing the position of the movable element (6), is connected by way of control electronics (16) with said solenoids (8, 10).

2. A magnetic valve as set forth in claim 1 **characterized in that** the sensor system comprises a permanent magnet (13), which is mounted on the movable element (6), as well as a magnetic field sensor (14), which is mounted on the body (2) of the magnetic valve on the side of said housing (5) which is opposite the permanent magnet (13).

3. A magnetic valve as set forth in claim 1, **characterized in that** the movable element (6) comprises a piston movable in a sleeve, or a flexible diaphragm provided with a blocking member (11) and that the housing (5) is established on the side of the movable element (6) which is opposite to said sealing surface (12).

4. A magnetic valve as set forth in claim 3, **characterized in that** the sealing surface (12) is annular, as known per se, and that the axially movable blocking member (11) cooperating therewith is tapered.

5. A magnetic valve as set forth in claim 2, **characterized in that** the permanent magnet (13) is mounted on the movable element (6) at the position of the blocking member (11) or directly on the blocking member (11).

## Patentansprüche

1. Materialfluss-steuerndes/regelndes Magnetventil (1), umfassend einen Materialeinlassanschluss (3), einen Auslassanschluss (4), zumindest eine Dichtoberfläche (12) sowie ein relativ zu der Dichtoberfläche (12) axial bewegliches Element (6), das in sich selbst oder durch die Verwendung eines damit zusammen beweglichen Sperrelements (11) im Zusammenwirken mit der Dichtoberfläche (12) einen Durchgang (15) zwischen dem Einlassanschluss (3) und dem Auslassanschluss (4) herstellt, wobei das bewegliche Element (6) zusammen mit dem Ventilkörper ein Gehäuse (5) definiert, das mit dem Einlassanschluss (3) durch einen von einem ersten Solenoid (8) gesteuerten ersten Strömungskanal (7) und mit dem Auslassanschluss (4) durch einen von einem zweiten Solenoid (10) gesteuerten zweiten Strömungskanal (9) verbindbar ist, wodurch das Volumen des Gehäuses (5) und gleichzeitig die Position des beweglichen Elements (6) mittels der Solenoide (8, 10) eingestellt wird, um zwischen den Einlass- und Auslassanschlüssen (3, 4) einen gesteuerten Durchgang (15) herzustellen,
**dadurch gekennzeichnet, dass** ein Sensorsystem (13, 14), das die Position des beweglichen Elements (6) sensiert, durch Steuerelektronik (16) mit den Solenoiden (8, 10) verbunden ist.

2. Magnetventil nach Anspruch 1, **dadurch gekennzeichnet, dass** das Sensorsystem einen Permanentmagneten (13), der an dem beweglichen Element (6) angebracht ist, sowie einen Magnetfeldsensor (14), der an dem Körper (2) des Magnetventils an der dem Permanentmagneten (13) gegenüberliegenden Seite des Gehäuses (5) angebracht ist, umfasst.

3. Magnetventil nach Anspruch 1, **dadurch gekennzeichnet, dass** das bewegliche Element (6) einen in einer Hülse beweglichen Kolben oder eine mit einem Sperrelement (11) versehene flexible Membrane umfasst, und dass das Gehäuse (5) an der der Dichtoberfläche (12) gegenüberliegenden Seite des beweglichen Elements (6) angeordnet ist.

4. Magnetventil nach Anspruch 3, **dadurch gekennzeichnet, dass** die Dichtoberfläche (12) ringförmig ist, wie per se bekannt, und dass das damit zusammenwirkende axial bewegliche Sperrelement (11) verjüngt ist.

5. Magnetventil nach Anspruch 2, **dadurch gekennzeichnet, dass** der Permanentmagnet (13) an dem beweglichen Element (6) an der Position des Sperrelements (11) oder direkt an dem Sperrelement (11) angebracht ist.

## Revendications

1. Soupape magnétique de régulation de l'écoulement des matériaux (1), comprenant un raccord d'entrée de matériau (3), un raccord de sortie (4), au moins une surface d'étanchéité (12), et un élément (6) mobile dans le sens axial par rapport à la surface d'étanchéité (12), qui, par lui-même ou en utilisant un élément de blocage (11) mobile conjointement avec celui-ci, coopère avec ladite surface d'étanchéité (12) établissant un orifice de passage (15) entre le raccord d'entrée (3) et le raccord de sortie (4), l'élément mobile (6) définissant, conjointement avec le corps de soupape, un logement (5) qui peut être raccordé au dit raccord d'entrée (3) par l'intermédiaire d'un premier canal de coulée (7) commandé par un premier solénoïde (8), et au dit raccord de sortie (4) par l'intermédiaire d'un second canal de coulée (9) commandé par un second solénoïde (10), le volume du logement (5), et par la même occasion la position de l'élément mobile (6) étant réglés au moyen des solénoïdes (8, 10), afin d'établir un orifice de passage commandé (15) entre les raccords d'entrée et de sortie (3, 4), **caractérisée en ce qu'**un système de capteur (13, 14), captant la position de l'élément mobile (6), est raccordé par l'intermédiaire d'une électronique de commande (16) auxdits solénoïdes (8, 10).

2. Soupape magnétique selon la revendication 1, **caractérisée en ce que** le système de capteur comprend un aimant permanent (13), qui est monté sur l'élément mobile (6), ainsi qu'un capteur de champ magnétique (14), qui est monté sur le corps (2) de la soupape magnétique sur le côté dudit logement (5) qui est opposé à l'aimant permanent (13).

3. Soupape magnétique selon la revendication 1, **caractérisée en ce que** l'élément mobile (6) comprend un piston mobile dans un manchon, ou une membrane flexible pourvue d'un élément de blocage (11) et **en ce que** le logement (5) est établi sur le côté de l'élément mobile (6) qui est opposé à ladite surface d'étanchéité (12).

4. Soupape magnétique selon la revendication 3, **caractérisée en ce que** la surface d'étanchéité (12) est annulaire, comme cela est connu en soi, et **en ce que** l'élément de blocage (11) mobile dans le sens axial coopérant avec celle-ci est conique.

5. Soupape magnétique selon la revendication 2, **caractérisée en ce que** l'aimant permanent (13) est monté sur l'élément mobile (6) à la position de l'élément de blocage (11) ou directement sur l'élément de blocage (11).
